# EUROPEAN PATENT SPECIFICATION

(11) **EP 0 343 734 B1**
(45) Date of publication and mention of the grant of the patent: **11.08.1993**
(21) Application number: 89201284.0
(22) Date of filing: 19.05.1989
(51) Int. Cl.: B01J 31/22, C08G 67/02, C07F 9/50, C07F 9/74

(54) **Catalyst compositions**
Katalysatorzusammensetzungen
Compositions de catalyseur

(30) Priority: 27.05.1988 NL 8801365
(43) Date of publication of application: 29.11.1989
(73) Proprietor: SHELL INTERNATIONALE RESEARCH MAATSCHAPPIJ B.V., 2596 HR Den Haag (NL)
(72) Inventor: Van Doorn, Johannes Adrianus, NL-1031 CM Amsterdam (NL); Kramer, Arris Herman, NL-1031 CM Amsterdam (NL); Snel, Johannes Jacobus Maria, NL-1031 CM Amsterdam (NL)

(56) References cited:
- EP-A- 0 181 014
- EP-A- 0 248 483
- WO-A-80/01690
- DE-A- 1 955 664
- US-A- 3 405 193
- US-A- 4 687 874

## Description

The invention relates to novel compositions which can be suitably used as catalysts in the preparation of polymers of carbon monoxide with one or more olefinically unsaturated compounds.

High molecular weight linear polymers of carbon monoxide with one or more olefinically unsaturated compounds (for the sake of brevity referred as A), in which the monomer units -(CO)- on the one hand, and the units A' originating in the applied monomers A on the other hand, occur in alternating order, can be prepared by contacting the monomers at an elevated temperature and pressure with a catalyst composition on the basis of
a) a palladium compound,
b) an anion of an acid with a pKa of less than 2, and
c) a triaryl phosphine or triaryl arsine.

A drawback of these catalyst compositions is their poor polymerizing activity.

The Applicant's non-prepublished EP-A-277695 discloses that the polymerizing activity of catalyst compositions containing triphenyl phosphine as component c) can be improved by incorporating polar substituents in the phenyl groups, ortho to the phosphorus. For instance, catalyst compositions containing tris(2-methoxyphenyl)phosphine as component c) exhibit a higher degree of polymerizing activity than similar catalyst compositions containing triphenyl phosphine as component c). The Applicant's non-prepublished NL-A-8702317 shows that the polymerizing activity of catalyst compositions containing a triaryl arsine as component c) can be improved by incorporating a compound containing a phenolic hydroxyl group as component d). For instance, the polymerizing activity of catalyst compositions containing triphenyl arsine as component c) can be enhanced by incorporating phenol as component d).

Applicant's EP-A-259914 shows that the polymerizing activity of catalyst compositions containing triaryl phosphine as component c) can be enhanced by replacing one of the aryl groups by a group containing a nitrogen atom which bears no hydrogen and which group has such a structure that in the phosphorus/nitrogen compound thus obtained, the nitrogen atom is connected to the phosphorus atom via an organic bridging group which contains at least two carbon atoms in the bridge. For instance, catalyst compositions containing diphenylphosphino-N,N-di(methyl)thioacetamide as component c) exhibit higher polymerizing activities than similar catalyst compositions containing triphenyl phosphine as component c).

Finally, Applicant's EP-A-181014 discloses as component c) a bidentate ligand of the general formula R¹R²-M-R-M-R³R⁴, wherein M represents phosphorus, arsenic or antimony, R represents a divalent organic bridging group having at least two carbon atoms in the bridge, and R¹, R², R³ and R⁴ are similar or dissimilar hydrocarbon groups.

Further research done by the Applicant into the above-mentioned catalyst compositions has now shown that the polymerizing activity of the catalyst compositions containing a triaryl phosphine or arsine as component c) can be much enhanced by replacing one of the aryl groups by an R³SR- or R³SeR- group, in which R³ represents an, optionally polar-substituted, hydrocarbon group and R is a bivalent bridging group containing at least two carbon atoms in the bridge. More in general, it has been found that catalyst compositions with attractive activities for the polymerization of carbon monoxide with one or more olefinically unsaturated compounds can be composed on the basis of the components a) and b) mentioned hereinbefore, and a compound of the general formula R¹R²M¹-R-M²R³, wherein M¹ is phosphorus or arsenic, M² is sulphur or selenium, R¹ and R² are the same or different, optionally polar-substituted, aryl groups, R³ is an optionally polar-substituted hydrocarbyl group and R is a bivalent bridging group containing at least two carbon atoms in the bridge, as component c).

Catalyst compositions based on components a) and b) and a compound of the general formula R¹R²M¹-R-M²R³ as component c) are novel compositions. Moreover, some of the compounds that can be suitably used as components c) in the novel catalyst compositions are novel compounds.

The present patent application therefore relates to novel catalyst compositions on the basis of
a) a palladium compound,
b) an anion of an acid with a pKa of less than 2, and
c) a compound of the general formula R¹R²M¹-R-M²R³, wherein M¹, M², R¹, R² and R³ and R have the meanings given hereinbefore.

The patent application further relates to the use of these catalyst compositions in the preparation of polymers of carbon monoxide with one or more olefinically unsaturated compounds and also to the polymers thus prepared and to shaped objects which consist at least partly of these polymers. Finally, the patent application relates to a number of the compounds that can be suitably used as components c) in the catalyst compositions, as novel compounds, as also to a process for the preparation of these compounds.

The palladium compound employed as component a) is preferably a palladium salt of a carboxylic acid, and palladium acetate in particular. Examples of suitable acids with a pKa of less than 2 (determined in aqueous solution at 18°C) whose anions should be present in the catalyst compositions as components b) are sulphonic acids, such as para-toluenesulphonic acid and halogencarboxylic acids, such as trifluoroacetic acid. In the catalyst compositions, component b) is preferably present in a quantity of from 0.5 to 50 and in particular of from 1 to 25 equivalents per mol of palladium. Component b) may be incorporated in the catalyst compositions in the form of an acid and/or in the form of a salt of a non-noble transition metal, such as a cupric salt.

The compounds that are preferred for use as components c) in the catalyst compositions of the invention have the general formula R¹R²M¹-R-M²R³, wherein M¹ is phosphorus or arsenic, M² is sulphur or selenium, R¹ and R² are the same or different, optionally polar-substituted, aryl groups, R³ is an optionally polar-substituted hydrocarbon group and R is a bivalent bridging group containing at least two carbon atoms in the bridge. In component c), the groups R¹ and R² are preferably optionally polar-substituted phenyl groups. Eligible polar substituents include alkoxy groups, such as methoxy groups. In component c), the groups R¹ and R² are preferably equal. Both optionally polar-substituted alkyl groups and optionally polar-substituted aryl groups are eligible groups R³. If group R³ is an aryl group, preference is given to an optionally polar-substituted phenyl group. Eligible polar substituents that may be present in group R³ include alkoxy groups, such as methoxy groups. In the general formula, M¹ is phosphorus or arsenic and M² is sulphur or selenium, i.e. both phosphino/sulpho, phosphino/seleno, arsino/sulpho and arsino/seleno compounds can be suitably used as component c). For the present purpose, compounds in which M¹ is phosphorus and M² is sulphur are very suitable compounds. In the components c), the bivalent bridging group R preferably contains three carbon atoms in the bridge. Compounds that can be very suitably used as components c) in the catalyst compositions of the invention are compounds of the general formula (R¹)₂M¹-(CH₂)₃-M²R³, in which M¹ is phosphorus and M² is selenium, or M¹ is arsenic and M² is sulphur and in which R¹ is a phenyl group and R³ is an optionally polar-substituted hydrocarbyl group. These compounds are novel compounds. They can be prepared for instance by reacting a compound of the general formula (R¹)₂M¹-(CH₂)₃-X with a compound of the general formula R³M²Y, in which general formulae X represents a halogen atom and Y an alkali metal atom. Examples of these novel compounds are
1-diphenylarsino-3-phenylthiopropane, and
1-diphenylphosphino-3-phenylselenopropane.

In the catalyst compositions of the invention, component c) is preferably used in a quantity of 0.5-2 and in particular of 0.75-1.5 mol per mol of palladium. In some cases, the performance of the catalyst compositions can be still further enhanced by the incorporation of a 1,4-quinone, such as 1,4-benzoquinone or 1,4-naphthoquinone.

The polymerization using the catalyst compositions of the invention is preferably carried out by contacting the monomers with a solution of the catalyst composition in a diluent in which the polymers are insoluble or virtually insoluble. Lower alcohols, such as methanol, are very suitable diluents. If desired, polymerization may be carried out in the gaseous phase. Olefinically unsaturated compounds that can be polymerized with carbon monoxide by using the catalyst compositions of the invention are compounds consisting exclusively of carbon and hydrogen as well as compounds which, in addition to carbon and hydrogen, contain one or more hetero-atoms. The process of the invention is preferably applied for the preparation of polymers of carbon monoxide with one or more olefinically unsaturated hydrocarbons. Examples of suitable hydrocarbon monomers are ethene and other alpha-olefins, such as propene, butene-1, hexene-1 and octene-1. The process of the invention is particularly suitable for application in the preparation of copolymers of carbon monoxide with ethene and for the preparation of terpolymers of carbon monoxide with ethene and another olefinically unsaturated hydrocarbon, in particular propene.

The quantity of catalyst composition employed in the preparation of the polymers may vary within wide limits. The quantity of catalyst used per mol of olefinically unsaturated compound to be polymerized preferably contains 10⁻⁷-10⁻³ and in particular 10⁻⁶-10⁻⁴ mol of palladium.

The preparation of the polymers is preferably carried out at a temperature of 40-120°C and a pressure of 20-150 bar and in particular at a temperature of 50-100°C and a pressure of 30-100 bar. The molar ratio of olefinically unsaturated compounds relative to carbon monoxide in the mixture to be polymerized is preferably 10:1-1:5 and in particular 5:1-1:2.

The invention will now be illustrated with the aid of the following examples.

### Example 1 (Comparative)

A carbon monoxide/ethene copolymer was prepared as follows. A mechanically stirred autoclave with a capacity of 250 ml which was at a temperature of 70°C was charged with a catalyst solution comprising
100 ml methanol,
0.1 mmol palladium acetate,
2 mmol trifluoro acetic acid, and
0.1 mmol triphenyl phosphine.

Ethene was blown into the autoclave until a pressure of 20 bar was reached, followed by carbon monoxide until a pressure of 40 bar was reached. Polymerization was terminated after 1 hour by cooling the reaction mixture to room temperature and releasing the pressure. The polymer was filtered off, washed with methanol and dried at 60°C.

10 mg copolymer was obtained.

### Example 2

1-diphenylphosphino-3-phenylthiopropane was prepared by reacting diphenyl disulphide with sodium, followed by the reaction of the sodium phenyl sulphide thus obtained with 1-diphenylphosphino-3-chloropropane.

A carbon monoxide/ethene copolymer was prepared substantially in the same way as the copolymer of Example 1, except that the catalyst solution contained 0.1 mmol of 1-diphenylphosphino-3-phenylthiopropane instead of triphenyl phosphine.

100 mg copolymer was obtained.

### Example 3

A carbon monoxide/ethene copolymer was prepared substantially in the same way as the copolymer of Example 1, except that the catalyst solution contained 0.1 mmol of 1-diphenylphosphino-3-phenylthiopropane instead of triphenyl phosphine, and 2 mmol of para-toluenesulphonic acid instead of trifluoroacetic acid.

200 mg copolymer was obtained.

### Example 4

A carbon monoxide/ethene copolymer was prepared substantially in the same way as the copolymer of Example 1, except that the catalyst solution contained 0.1 mmol of 1-diphenylphosphino-3-phenylthiopropane instead of triphenyl phosphine, and 2 mmol of paratoluenesulphonic acid instead of trifluoroacetic acid and in addition, 10 mmol of 1,4-naphthoquinone.

100 mg copolymer was obtained.

### Example 5

A carbon monoxide/ethene copolymer was prepared substantially in the same way as the copolymer of Example 1, except that the catalyst solution contained 0.1 mmol of 1-diphenylphosphino-3-phenylthiopropane instead of triphenyl phosphine, and 2 mmol of trifluoromethanesulphonic acid instead of trifluoroacetic acid.

300 mg copolymer was obtained.

### Example 6

A carbon monoxide/ethene copolymer was prepared substantially in the same way as the copolymer of Example 1, except that the catalyst solution contained 0.1 mmol of 1-diphenylphosphino-3-phenylthiopropane instead of triphenyl phosphine and in addition, 1 ml of nitrobenzene.

100 mg copolymer was obtained.

### Example 7

A carbon monoxide/ethene copolymer was prepared substantially in the same way as the copolymer of Example 1, except that the catalyst solution contained 0.1 mmol of 1-diphenylphosphino-3-phenylthiopropane instead of triphenyl phosphine, 75 ml instead of 100 ml of methanol and in addition, 25 ml of N-methylpyrrolidone.

100 mg copolymer was obtained.

### Example 8

1-diphenylphosphino-3-methylthiopropane was prepared by the reaction of dimethyl disulphide with sodium, followed by the reaction of the sodium methyl sulphide thus obtained with 1-diphenylphosphino-3-chloropropane.

A carbon monoxide/ethene copolymer was prepared substantially in the same way as the copolymer of Example 1, except that the catalyst solution contained 0.1 mmol of 1-diphenylphosphino-3-methylthiopropane instead of triphenyl phosphine.

200 mg copolymer was obtained.

### Example 9

1-diphenylphosphino-3-(2-methoxyphenyl)thiopropane was prepared by the reaction of 2-lithio-anisole with sulphur, followed by the reaction of the lithium 2-methoxyphenyl sulphide thus obtained with 1-diphenylphosphino-3-chloropropane.

A carbon monoxide/ethene copolymer was prepared substantially in the same way as the copolymer of Example 1, except that the catalyst solution contained 0.1 mmol of 1-diphenylphosphino-3-(2-methoxyphenyl)thiopropane instead of triphenyl phosphine.

200 mg copolymer was obtained.

### Example 10

1-diphenylarsino-3-phenylthiopropane was prepared by the reaction of diphenyl disulphide with sodium, followed by the reaction of the sodium phenyl sulphide thus obtained with 1-diphenylarsino-3-chloropropane.

A carbon monoxide/ethene copolymer was prepared substantially in the same way as the copolymer of Example 1, except that the catalyst solution contained 0.1 mmol of 1-diphenylarsino-3-phenylthiopropane instead of triphenyl phosphine.

400 mg copolymer was obtained.

### Example 11

1-diphenylphosphino-3-phenylselenopropane was prepared by the reaction of diphenyl diselenide with sodium, followed by the reaction of the sodium phenyl selenide thus obtained with 1-diphenylphosphino-3-chloropropane.

A carbon monoxide/ethene copolymer was prepared substantially in the same way as the copolymer of Example 1, except that the catalyst solution contained 0.1 mmol of 1-diphenylphosphino-3-phenylselenopropane instead of triphenyl phosphine.

200 mg copolymer was obtained.

### Example 12 (Comparative)

Diphenylphosphino-N,N-di(methyl)thioacetamide was prepared by the reaction of N,N-di(methyl)thioacetamide with lithium diisopropyl amide, followed by the reaction of the lithio-N,N-dimethylthioacetamide thus obtained with diphenylchloro phosphine.

A carbon monoxide/ethene copolymer was prepared substantially in the same way as the copolymer of Example 1, except that the catalyst solution contained 0.1 mmol of diphenylphosphino-N,N-dimethylthioacetamide instead of triphenyl phosphine.

100 mg copolymer was obtained.

Of Examples 1-12, Examples 2-11 are examples in accordance with the invention. In Examples 2 and 8-11, the preparation of compounds of the general formula (C₆H₅)₂M¹-(CH₂)₃-M²R³ is described. In Examples 2-11, carbon monoxide/ethene copolymers are prepared by using catalyst compositions containing these compounds as component c). Examples 1 and 12 have been included in the patent application for comparison. The gain in polymerizing activity that is obtained when one of the phenyl groups in the catalyst component triphenyl phosphine is replaced by an -RM²R³ group becomes apparent upon comparison of the results of Examples 2-9 and 11 with the result of Example 1. Example 12 is a demonstration of the find mentioned in the preamble that the polymerizing activity of a catalyst composition containing triphenyl phosphine as component c) can also be improved by replacing one of the phenyl groups by a certain nitrogen-containing group. In Example 12, this group was a -CH₂(C=S)N(CH₃)₂ group.

With the aid of ¹³C-NMR analysis it was established that the carbon monoxide/ethene copolymers prepared in accordance with Examples 1-12 had a linear structure and were made up of units -(CO)-(C₂H₄)-.

## Claims

1. Catalyst compositions based upon
a) a palladium compound,
b) an anion of an acid with a pKa of less than 2, and
c) a phosphine or arsine,
characterized in that component c) is a compound of the general formula R¹R²M¹-R-M²R³ wherein M¹ is phosphorus or arsenic, M² is sulphur or selenium, R¹ and R² are the same or different, optionally polar-substituted aryl groups, R³ is an optionally polar-substituted hydrocarbyl group and R is a bivalent bridging group containing at least two carbon atoms in the bridge.

2. Catalyst compositions as claimed in claim 1, characterized in that they are based upon a palladium salt of a carboxylic acid, such as palladium acetate, as component a).

3. Catalyst compositions as claimed in claim 1 or 2, characterized in that they are based upon an anion of a sulphonic acid, such as para-toluenesulphonic acid, or of a halogen carboxylic acid, such as trifluoroacetic acid, as component b).

4. Catalyst compositions as claimed in one or more of claims 1-3, characterized in that component b) is present therein in a quantity of 1-25 equivalents per mol of palladium.

5. Catalyst compositions as claimed in one or more of claims 1-4, characterized in that they include a compound in which the groups R¹ and R² are optionally polar-substituted phenyl groups, as component c).

6. Catalyst compositions as claimed in one or more of claims 1-5, characterized in that the component c) is a compound in which the group R³ is an optionally polar-substituted phenyl group.

7. Catalyst compositions as claimed in one or more of claims 1-6, characterized in that they include a compound in which M¹ represents phosphorus and M² sulphur, as component c).

8. Catalyst compositions as claimed in one or more of claims 1-7, characterized in that they include a compound in which the bivalent bridging group R contains three carbon atoms in the bridge, as component c).

9. Catalyst compositions as claimed in one or more of claims 1-8, characterized in that component c) is present therein in a quantity of 0.75-1.5 mol per mol of palladium.

10. Process for the preparation of polymers, characterized in that a mixture of carbon monoxide with one or more olefinically unsaturated compounds is contacted at an elevated temperature and pressure with a catalyst composition as claimed in one or more of claims 1-9.

11. Process as claimed in claim 10, characterized in that it is carried out at a temperature of 50-100^{o}C, a pressure of 30-100 bar and a molar ratio of the olefinically unsaturated compounds relative to carbon monoxide in the mixture to be polymerized, of 5:1-1:2, and that per mol of olefinically unsaturated compound, such a quantity of catalyst composition is used as to contain 10⁻⁶-10⁻⁴ mol of palladium.

12. Compounds of the general formula (R¹)₂M¹-(CH₂)₃-M²R³, in which M¹ is phosphorus and M² is selenium, or M is arsenic and M² is sulphur and in which R¹ is a phenyl group and R³ is an optionally polar-substituted hydrocarbyl group.

13. Compounds as claimed in claim 12, characterized in being selected from 1-diphenylarsino-3-phenylthiopropane and 1-diphenylphosphino-3-phenylselenopropane.

## Patentansprüche

1. Katalysatorzusammensetzungen auf der Basis von
a) einer Palladiumverbindung,
b) einem Anion einer Säure mit einer Säurezahl pKa von weniger als 2, und
c) einem Phosphin oder Arsin,
dadurch **gekennzeichnet,** daß die Komponente c) eine Verbindung der allgemeinen Formel R¹R²M¹-R-M²R³ ist, in welcher M1 Phosphor oder Arsen bedeutet, M² Schwefel oder Selen darstellt, R¹ und R² gleich oder verschieden sind und gegebenenfalls polarsubstituierte Arylgruppen darstellen, R³ eine gegebenenfalls polarsubstituierte Kohlenwasserstoffgruppe bedeutet und R eine zweiwertige Brückengruppe ist, welche mindestens zwei Kohlenstoffatome in der Brücke enthält.

2. Katalysatorzusammensetzungen wie in Anspruch 1 beansprucht, dadurch gekennzeichnet, daß sie als Basiskomponente (a) ein Palladiumsalz einer Carbonsäure, wie Palladiumacetat, enthalten.

3. Katalysatorzusammensetzungen wie in Anspruch 1 oder 2 beansprucht, dadurch gekennzeichnet, daß sie als Basiskomponente (b) das Anion einer Sulfonsäure, wie p-Toluolsulfonsäure, oder einer Halogencarbonsäure, wie Trifluoressigsäure, enthalten.

4. Katalysatorzusammensetzungen nach einem oder mehreren der Ansprüche 1 bis 3, dadurch gekennzeichnet, daß die Komponente (b) in einer Menge vorliegt, welche 1 bis 25 Äquivalenten je Mol Palladium entspricht.

5. Katalysatorzusammensetzungen wie in einem oder mehreren der Ansprüche 1 bis 4 beansprucht, dadurch gekennzeichnet, daß sie als Komponente c) eine Verbindung enthalten, in welcher die Gruppen R¹ und R² gegebenenfalls polarsubstituierte Phenylgruppen darstellen.

6. Katalysatorzusammensetzungen nach einem oder mehreren der Ansprüche 1 bis 5, dadurch gekennzeichnet, daß die Komponente c) eine Verbindung ist, in welcher die Gruppe R³ eine gegebenenfalls polarsubstituierte Phenylgruppe darstellt.

7. Katalysatorzusammensetzungen nach einem oder mehreren der Ansprüche 1 bis 6, dadurch gekennzeichnet, daß sie als Komponente c) eine Verbindung enthalten, in welcher M¹ Phosphor und M² Schwefel bedeuten.

8. Katalysatorzusammensetzungen nach einem oder mehreren der Ansprüche 1 bis 7, dadurch gekennzeichnet, daß sie als Komponente c) eine Verbindung enthalten, in welcher die zweiwertige Brückengruppe R drei Kohlenstoffatome in der Brücke enthält.

9. Katalysatorzusammensetzungen nach einem oder mehreren der Ansprüche 1 bis 8, dadurch gekennzeichnet, daß sie die Komponente c) in einer Menge von 0.75 bis 1.5 Mol je Mol Palladium enthalten.

10. Verfahren zur Herstellung von Polymeren, dadurch gekennzeichnet, daß eine Mischung aus Kohlenmonoxid und einer oder mehreren olefinisch ungesättigten Verbindung(en) bei erhöhten Temperaturen und erhöhtem Druck mit einer Katalysatorzusammensetzung, wie in einem oder mehreren der Ansprüche 1 bis 9 beansprucht, kontaktiert wird.

11. Verfahren wie in Anspruch 10 beansprucht, dadurch gekennzeichnet, daß es bei einer Temperatur zwischen 50 und 100°C, einem Druck zwischen 30 und 100 bar und bei einem molaren Verhältnis der olefinisch ungesättigten Verbindung zum Kohlenmonoxid in der zu polymerisierenden Mischung von 5:1 bis 1:2 durchgeführt wird und daß je Mol olefinisch ungesättigter Verbindung eine solche Menge der Katalysatorzusammensetzung verwendet wird, daß 10⁻⁶ bis 10⁻⁴ Mol Palladium vorhanden sind.

12. Verbindungen der allgemeinen Formel (R¹)₂M¹-(CH₂)₃-M²R³, in welcher M¹ Phosphor und M² Selen bedeuten oder in der M¹ Arsen und M² Schwefel sind, in welcher R¹ die Phenylgruppe und R³ eine gegebenenfalls polarsubstituierte Kohlenwasserstoffgruppe darstellt.

13. Verbindungen wie in Anspruch 12 beansprucht, dadurch gekennzeichnet, daß sie ausgewählt sind aus 1-Diphenylarsino-3-phenylthiopropan und 1-Diphenylphosphino-3-phenylselenopropan.

## Revendications

1. Compositions catalytiques à base de
a) un composé du palladium,
b) un anion d'un acide ayant un pKa de moins de 2, et
c) une phosphine ou arsine,
caractérisées en ce que le constituant c) est un composé de la formule générale R¹R²M¹-R-M²R³, dans laquelle M¹ est du phosphore ou de l'arsenic, M² est du soufre ou du sélénium, R¹ et R² sont des groupes aryle portant éventuellement un substituant polaire identiques ou différents, R³ est un groupe hydrocarbyle portant éventuellement un substituant polaire et R est un groupe bivalent formant pont contenant au moins deux atomes de carbone dans le pont.

2. Compositions catalytiques selon la revendication 1, caractérisées en ce qu'elles sont à base d'un sel de palladium d'un acide carboxylique, tel que l'acétate de palladium, comme constituant a).

3. Compositions catalytiques selon la revendication 1 ou 2, caractérisées en ce qu'elles sont à base d'un anion d'un acide sulfonique, tel que l'acide paratoluènesulfonique, ou d'un acide halogénocarboxylique, tel que l'acide trifluoro-acétique, comme constituant b).

4. Compositions catalytiques selon une ou plusieurs des revendications 1-3, caractérisées en ce que le constituant b) est présent à raison de 1-25 équiyalents par mole de palladium.

5. Compositions catalytiques selon une ou plusieurs des revendications 1-4, caractérisées en ce qu'elles comprennent un composé dans lequel les groupes R¹ et R² sont des groupes phényle portant éventuellement des substituants polaires, comme constituant c).

6. Compositions catalytiques selon une ou plusieurs des revendications 1-5, caractérisées en ce que le constituant c) est un composé dans lequel le groupe R³ est un groupe phényle portant éventuellement un substituant polaire.

7. Compositions catalytiques selon une ou plusieurs des revendications 1-6, caractérisées en ce qu'elles comprennent un composé dans lequel M¹ représente du phosphore et M² du soufre, comme constituant c).

8. Compositions catalytiques selon une ou plusieurs des revendications 1-7, caractérisées en ce qu'elles comprennent un composé dans lequel le groupe bivalent R formant pont contient trois atomes de carbone dans le pont comme constituant c).

9. Compositions catalytiques selon une ou plusieurs des revendications 1-8, caractérisées en ce que le constituant c) y est présent à raison de 0,75 à 1,5 mole par mole de palladium.

10. Procédé pour la préparation de polymères, caractérisé en ce qu'un mélange d'oxyde de carbone avec un ou plusieurs composés oléfiniquement insaturés est mis en contact à température et pression élevées avec une composition catalytique selon une ou plusieurs des revendications 1-9.

11. procédé selon la revendication 10, caractérisé en ce qu'il est mis en oeuvre à une température de 50-100°C, une pression de 30-100 bars et un rapport molaire des composés oléfiniquement insaturés à l'oxyde de carbone dans le mélange à polymériser compris entre 5:1 et 1:2, et que par mole de composé oléfiniquement insaturé on utilise une quantité de composition catalytique telle qu'elle contienne de 10⁻⁶ à 10⁻⁴ mole de palladium.

12. Composés de la formule générale (R¹)₂M¹-(CH₂)₃-M²R³, dans laquelle M¹ est du phosphore et M² est du soufre et dans laquelle R¹ est un groupe phényle et R³ est un groupe hydrocarbyle portant éventuellement un substituant polaire.

13. Composés selon la revendication 12, caractérisés en ce qu'ils sont choisis parmi le 1-diphénylarsino-3-phénylthiopropane et le 1-diphénylphosphino-3-phénylsélénopropane.
